# EUROPÄISCHE PATENTSCHRIFT

(11) **EP 1 988 294 B1**
(45) Veröffentlichungstag und Bekanntmachung des Hinweises auf die Patenterteilung: **11.07.2012**
(21) Anmeldenummer: 08103655.0
(22) Anmeldetag: 22.04.2008
(51) Int. Cl.: F15B 1/02, F15B 11/072

(54) **Hydraulisch-pneumatischer Antrieb**
Hydraulic-pneumatic drive
Entraînement hydropneumatique

(30) Priorität: 04.05.2007 DE 102007021063
(43) Veröffentlichungstag der Anmeldung: 05.11.2008
(73) Patentinhaber: Robert Bosch GmbH, 70184 Stuttgart (DE)
(72) Erfinder: Dantlgraber, Jörg, 97816 Lohr (DE); Bauer, Richard, 97225 Zellingen (DE); Mark, Alexander, 97080 Würzburg (DE); Försterling, Heino, 97816 Lohr (DE)
(74) Vertreter: Thürer, Andreas

(56) Entgegenhaltungen:
- EP-A2- 0 857 877
- WO-A1-00/37800
- DE-A1- 19 903 907
- US-A- 3 608 311
- US-A- 5 579 640

## Beschreibung

Die Erfindung betrifft einen hydraulisch-pneumatischen Antrieb für zumindest einen Verbraucher gemäß dem Oberbegriff des Patentanspruchs 1.

Zur Erhöhung der Speicherkapazität eines Energiespeichers für einen hydraulischen Verbraucher ist es bekannt, Druckgasspeicher zu verwenden, die im Vergleich zu Hydrospeichern eine größere Energiespeicherkapazität aufweisen. Die durch ein unter Druck stehendes Gas gespeicherte Energie wird über einen pneumatisch-hydraulischen Wandler in hydraulische Energie, beispielsweise zum Antrieb eines Fahrzeugs, umgesetzt.

Aus der EP 0 857 877 A2 ist beispielsweise ein hydraulisch-pneumatischer Antrieb bekannt, dessen pneumatisch-hydraulischer Wandler im Wesentlichen aus zumindest zwei gegensinnig arbeitenden Wandlerkolben besteht, deren Arbeitsräume jeweils über ein Schaltventil gesteuert mit einem Druckgasspeicher verbindbar sind. Im Betrieb wird jeweils der Arbeitsraum des am oberen Totpunkt angelangten Wandlerkolbens mit Druckgas beaufschlagt, so dass sich das Druckgas im Arbeitsraum entspannt und die Wandlerkolbenanordnung verschiebt. Die Wandlerkolben sind über eine Zahnstange verbunden, mit der ein Zahnrad kämmt, das über eine Abtriebswelle eine Hydropumpe antreibt, so dass die mechanische Bewegungsenergie der pneumatisch angetriebenen Wandlerkolbenanordnung in hydraulische Energie umgewandelt wird. Nachteilig bei derartigen hydraulisch-pneumatischen Antrieben ist, dass die Speicherkapazität der Druckgasspeicher für viele Anwendungen nicht ausreicht und ein hoher fertigungstechnischer Aufwand zur Herstellung des pneumatisch-hydraulischen Wandlers erforderlich ist.

Demgegenüber liegt der Erfindung die Aufgabe zugrunde, einen hydraulisch-pneumatischen Antrieb zu schaffen, bei dem eine kompakte Bauweise bei hoher Energiespeicherkapazität ermöglicht ist.

Diese Aufgabe wird durch einen hydraulisch-pneumatischen Antrieb mit den Merkmalen des Patentanspruchs 1 gelöst.

Der erfindungsgemäße hydraulisch-pneumatische Antrieb verwendet einen pneumatisch-hydraulischen Wandler, über den in zumindest einem Druckgasspeicher gespeicherte Energie in hydraulische Energie umsetzbar und zum Antrieb des hydraulischen Verbrauchers verwendbar ist und über den hydraulische Energie des Verbrauchers in pneumatische Energie umsetzbar ist. Erfindungsgemäß hat der Antrieb zumindest einen dem Druckgasspeicher zugeordneten Wärmespeicher, der warmem Druckgas beim Befüllen des Druckgasspeichers Wärmeenergie entnimmt und/oder der dem Druckgas bei der Entnahme Wärmeenergie zuführt. Durch die Speicherung der Wärmeenergie in dem Wärmespeicher bleibt die Temperatur des Druckgases niedrig, so dass dieses bei einem bestimmten Druck weniger Volumen einnimmt und die Energiespeicherdichte des Druckgasspeichers erhöht wird. Dadurch hat der Druckgasspeicher gegenüber dem Stand der Technik gemäß der EP 0 857 877 A2 eine wesentlich höhere Energiespeicherkapazität bei kompakter Bauweise. Durch Zufuhr von Wärmeenergie an das Druckgas kann der Gesamt-wirkungsgrad des Antriebssystems wesentlich verbessert werden.

Gemäß einem besonders bevorzugten Ausführungsbeispiel der Erfindung findet als Wärmespeicher ein Latentwärmespeicher Verwendung. Dieser speichert thermische Energie durch die Änderung des Aggregatzustandes eines PCM-Speichermaterials (Phase Change Material). Beim Aufladen des Latentwärmespeichers werden beispielsweise spezielle Salze oder Paraffine als Speichermedium geschmolzen, die dabei sehr viel Wärmeenergie aufnehmen (Schmelzwärme) und beim Erstarren wieder abgeben (Entladen).

Der Latentwärmespeicher hat bei einem Ausführungsbeispiel der Erfindung zumindest zwei unterschiedliche Speichermaterialien mit verschiedenen Betriebstemperaturen, wobei das warme Druckgas zunächst das Speichermedium mit der höheren Betriebstemperatur und dann das Speichermedium mit der niedrigeren Betriebstemperatur beaufschlagt. Dadurch kann dem Wärmespeicher eine größere Wärmemenge zugeführt oder entzogen und der Wirkungsgrad des Systems verbessert werden.

Bei einem bevorzugten Ausführungsbeispiel ist der zumindest eine Wärmespeicher über einen Wärmetauscher mit der Abwärme einer Wärmequelle, beispielsweise einer Verbrennungskraftmaschine eines Fahrzeugs, oder mit einer Kältequelle, insbesondere einer Klimaanlage, beaufschlagt. Aufgrund des Wärmetauschers kann Abwärme von Verbrennungskraftmaschinen oder anderen Wärmequellen zur Wärmebeaufschlagung des Wärmespeichers genutzt werden, wobei die Aufladung immer dann stattfinden kann, wenn eine Wärmequelle zur Verfügung steht, beispielsweise während des Betriebs einer Verbrennungskraftmaschine in einem Fahrzeug. Diese Wärmeenergie steht damit auch zur Verfügung, wenn die Wärmequelle nicht im Betrieb ist, beispielsweise während des rein pneumatisch-hydraulischen Fahrens eines hydraulisch pneumatischen Hybridfahrzeugs. Da insbesondere Abwärme genutzt wird, kann der Gesamtwirkungsgrad des Systems weiter verbessert werden.

Im Bereich des Druckgasströmungspfades ist bei einer erfindungsgemäßen Variante zumindest ein Wärmetauscher angeordnet, der das Druckgas direkt mit Abwärme einer Verbrennungskraftmaschine oder einer anderen Wärmequelle, insbesondere mit Abgaswärme beaufschlagt, so dass der Gesamtwirkungsgrad des Systems weiter verbessert ist.

Vorzugsweise wird dem warmen Druckgas beim Befüllen des Druckgasspeichers über den Wärmespeicher Wärmeenergie entnommen und dem kalten Druckgas bei der Entnahme aus dem Druckgasspeicher über den Wärmespeicher, den Wärmespeicher mit Wärmetauscher und/oder den Wärmetauscher Wärmeenergie zugeführt.

Der pneumatisch-hydraulische-Wandler hat gemäß einem bevorzugten Ausführungsbeispiel zumindest eine drehfest mit mindestens einer Hydromaschine verbundene, als Motor oder Pumpe wirkende Pneumatikmaschine. Vorzugsweise sind die Hydromaschine und die Pneumatikmaschine auf einer gemeinsamen Welle angeordnet. Die pneumatische Seite ist beispielsweise als Kolbenmaschine, die als Verdichter und als Expander betrieben werden kann ausgeführt. Weiterhin ist die Verwendung einer Strömungsmaschine auf der pneumatischen Seite möglich. Diese kann die Entspannung des Druckgases und damit die Wandlung in hydraulische Energie übernehmen, oder verwendet werden, um mit der Restenergie, des beinahe auf Umgebungsdruck entspannten Druckgases ein Nebenaggregat, beispielsweise einen elektrischen Generator zu betreiben. Eine Kombination von Axialkolbenmaschine und Strömungsmaschine auf der pneumatischen Seite ist möglich. Als Hydromaschine kann beispielsweise eine Axialkolbenmaschine oder eine Radialkolbenmaschine verwendet werden. Die Pneumatikmaschine und/oder die Hydromaschine sind vorzugsweise verstellbar ausgeführt. Durch das Rotationsmaschinenprinzip des pneumatisch-hydraulischen-Wandlers wird eine hohe Leistungsdichte erzielt.

Der Hydromaschine ist vorzugsweise zumindest ein Hydrospeicher zugeordnet. Dieser kann zur Erzeugung eines hydraulischen Konstantdrucks verwendet werden. Dadurch müssen die Hydromaschinen nicht mehr auf einen unteren Betriebsdruck ausgelegt werden, so dass im Vergleich kleinere Maschinen verwendet werden können, um die gleiche Leistung zu erreichen. Mit Hilfe des Hydrospeichers kann der Antrieb des Hydromotors weiterhin vergleichmäßigt werden. Eine weitere Möglichkeit besteht darin, den Hydrospeicher kontinuierlich über den pneumatisch-hydraulischen Wandler mit Energie aus dem Druckgasspeicher zu füllen. Diese Energie steht dann aufgrund der hohen Leistungsdichte des Hydrospeichers schnell an der Hydromaschine zur Verfügung. In umgekehrter Richtung kann der Hydrospeicher schnell von der Hydromaschine, beispielsweise durch Rekuperation von Bremsenergie eines Fahrzeugs, gefüllt werden und die hydraulische Energie anschließend vergleichsweise langsam vom pneumatisch-hydraulischen Wandler in pneumatische Energie überführt und im Druckgasspeicher gespeichert werden. Dadurch kann die installierte Leistung des pneumatisch-hydraulischen Wandlers kleiner ausfallen.

Die Anmelderin behält sich vor, auf den pneumatisch-hydraulischen-Wandler eigene unabhängige Ansprüche zu richten.

Als besonders vorteilhaft hat es sich erwiesen, wenn die Pneumatikmaschine und/oder die Hydromaschine mehrstufig ausgeführt ist. Das Druckgas durchströmt vorzugsweise nach jeder Pneumatikstufe zumindest einen Wärmespeicher und gibt die bei der vorangegangenen Verdichtung entstandene Wärme im Wesentlichen an den Wärmespeicher ab und/oder nimmt bei einem vorangegangen Expansionsvorgang die in dem Wärmespeicher gespeicherte Wärme im Wesentlichen auf. Das heißt, die Pneumatikmaschine ist insbesondere mehrstufig ausgeführt, um eine für den Wärmespeicher nutzbare Zwischenkühlung und/oder Zwischenwärmung des Druckgas-Volumenstroms zu ermöglichen.

Sonstige vorteilhafte Weiterbildungen der Erfindung sind Gegenstand weiterer Unteransprüche.

Im Folgenden werden bevorzugte Ausführungsbeispiele der Erfindung anhand schematischer Zeichnungen näher erläutert. Es zeigen:
Figur 1 ein Schaltschema eines erfindungsgemäßen hydraulisch-pneumatischen Antriebs;
Figur 2 ein Schaltschema eines dreistufigen pneumatisch-hydraulischen Wandlers mit hydraulikseitiger Verstellung;
Figur 3 ein Schaltschema eines dreistufigen pneumatisch-hydraulischen Wandlers mit gekoppelter pneumatikseitiger Verstellung und
Figur 4 ein Schaltschema eines dreistufigen pneumatisch-hydraulischen Wandlers mit pneumatikseitiger Einzelverstellung.

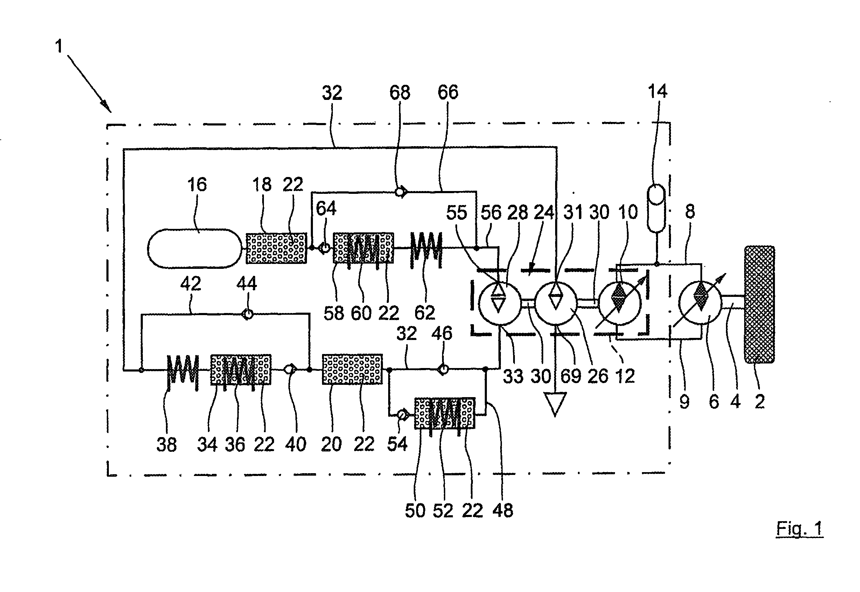

Figur 1 zeigt ein Schaltschema eines erfindungsgemäßen hydraulisch-pneumatischen Antriebs 1, beispielsweise eines durch ein Rad 2 angedeuteten Hybridfahrzeugs. Das Rad 2 ist über eine An-/Abtriebswelle 4 mit einer verstellbaren Hydromaschine 6 verbunden, die als Motor oder Pumpe wirkt und über Ringleitungen 8,9 mit einer zweiten, ebenfalls als Motor oder Pumpe wirkenden, verstellbaren Hydromaschine 10 verbunden ist, die einen Teil eines pneumatisch-hydraulischen Wandlers 12 ausbildet. Um den Druck in der Ringleitung 8 im Wesentlichen konstant zu halten, ist ein Hydrospeicher 14 an diese Leitung angeschlossen. Der pneumatisch-hydraulische-Wandler 12 hat eine drehfest mit der Hydromaschine 10 verbundene, als Motor oder Pumpe wirkende Pneumatikmaschine 24. Diese ist bei dem dargestellten Ausführungsbeispiel als zweistufige Kolbenmaschine mit einer Niederdruckstufe 26 und einer Hochdruckstufe 28 ausgeführt, die jeweils als Pumpe oder Motor betrieben werden können. Die Hydromaschine 10 und die Pneumatikmaschine 24 sind auf einer gemeinsamen Welle 30 angeordnet. Ein Anschluss 31 der Niederdruckstufe 26 ist über eine Niederdruckleitung 32 mit einem Anschluss 33 der Hochdruckstufe 28 verbunden, in der ein Latentwärmespeicher 20 mit vorgeschaltetem Latentwärmespeicher 34 mit Wärmetauscher 36 und ein diesem zugeordneter Wärmetauscher 38 angeordnet sind. In der Niederdruckleitung 32 ist zwischen dem Latentwärmespeicher 34 mit Wärmetauscher 36 und dem Latentwärmespeicher 20 ein in Richtung des Latentwärmespeichers 20 sperrendes Rückschlagventil 40 angeordnet. Von der Niederdruckleitung 32 zweigt zwischen der Niederdruckstufe 26 und dem Wärmetauscher 38 eine Bypassleitung 42 ab, die zwischen dem Rückschlagventil 40 und dem Latentwärmespeicher 20 wieder in die Niederdruckleitung 32 mündet. In der Bypassleitung 42 ist ein in Richtung der Niederdruckstufe 26 sperrendes Rückschlagventil 44 angeordnet. In der Niederdruckleitung 32 ist zwischen dem Latentwärmespeicher 20 und der Hochdruckstufe 28 ein in Richtung des Latentwärmespeichers 20 schließendes Rückschlagventil 46 vorgesehen, wobei zwischen dem Latentwärmespeicher 20 und dem Rückschlagventil 46 eine Bypassleitung 48 abzweigt, in der ein zusätzlicher Latentwärmespeicher 50 mit Wärmestauscher 52 angeordnet ist. In der Bypassleitung 48 ist ein in Richtung dieses zusätzlichen Latentwärmespeichers 50 sperrendes Rückschlagventil 54 angeordnet. Die Bypassleitung 48 ist zwischen dem zusätzlichen Latentwärme-speicher 50 und der Hochdruckstufe 28, d.h. unter Umgehung des Rückschlagventils 46, mit der Niederdruckleitung 32 verbunden. Ein Anschluss 55 der Hochdruckstufe 28 ist über eine Hochdruckleitung 56 mit einem Druckgasspeicher 16 verbunden, wobei dem Druckgasspeicher 16 ein Latentwärmespeicher 18 mit einem vor-geschalteten Latentwärmespeicher 58 mit Wärmetauscher 60 und ein zwischen dem Latentwärmespeicher 58 und dem Anschluss 55 der Hochdruckstufe 28 vorgesehener Wärmetauscher 62 zugeordnet sind. In der Hochdruckleitung 56 ist zwischen dem Latentwärmespeicher 18 und dem Latentwärmespeicher 58 mit Wärmetauscher 60 ein in Richtung des Latentwärmespeichers 18 sperrendes Rückschlagventil 64 vorgesehen. Von der Hochdruckleitung 56 zweigt wandlerseitig vor dem Wärmetauscher 62 eine Bypassleitung 66 ab, die zwischen dem Latentwärmespeicher 18 und dem Rückschlagventil 64 in die Hochdruckleitung 56 mündet, so dass die Hochdruckstufe 28 über den Latentwärmespeicher 18 mit dem Druckgasspeicher 16 verbundenen ist. In der Bypassleitung 66 ist ein in Richtung der Hochdruckstufe 28 sperrendes Rückschlagventil 68 vorgesehen. Die Wärmetauscher 38, 62 und Wärmestauscher 36, 52, 60 mit Latentwärmespeicher 34, 50, 58 sind mit der Abwärme einer Wärmequelle, beispielsweise der Abgaswärme einer Verbrennungskraftmaschine eines Fahrzeugs, oder mit einer Kältequelle, insbesondere einer Klimaanlage, beaufschlagt. Aufgrund der Wärmetauscher 36, 38, 52, 60, 62 kann Abwärme von Verbrennungskraftmaschinen oder anderen Wärmequellen zur Wärmebeaufschlagung der Wärmespeicher 38, 50, 58 genutzt werden, wobei die Aufladung immer dann stattfinden kann, wenn eine Wärmequelle zur Verfügung steht, beispielsweise während des Betriebs einer Verbrennungskraftmaschine in einem Fahrzeug. Die gespeicherte Wärmeenergie steht damit auch zur Verfügung, wenn die Wärmequelle nicht im Betrieb ist, beispielsweise während des rein pneumatisch-hydraulischen Fahrens eines hydraulisch pneumatischen Hybridfahrzeugs. Die Latentwärmespeicher 18, 20, 34, 50, 58 können zwei unterschiedliche Speichermaterialien mit verschiedenen Betriebstemperaturen aufweisen, wobei das warme Druckgas zunächst das Speichermedium mit der höheren Betriebstemperatur und dann das Speichermedium mit der niedrigeren Betriebstemperatur beaufschlagt. Dadurch kann dem Wärmespeicher 18, 20, 34, 50, 58 eine größere Wärmemenge entzogen und der Wirkungsgrad des Systems weiter verbessert werden.

Über den pneumatisch-hydraulischen Wandler 12 ist die in dem Druckgasspeicher 16 gespeicherte Energie in hydraulische Energie umsetzbar und zum Antrieb des Verbrauchers 2 verwendbar, sowie hydraulische Energie des Verbrauchers 2 in pneumatische Energie umsetzbar. Die dem Druckgasspeicher 16 zugeordneten Wärmespeicher 18, 20 entnehmen warmem Druckgas beim Befüllen des Druckgasspeichers 16 Wärmeenergie und führen dem Druckgas bei der Entnahme aus dem Druckgasspeicher 16 Wärmeenergie zu. Als Wärmespeicher 18, 20 finden bei dem dargestellten Ausführungsbeispiel Latentwärmespeicher Verwendung, die thermische Energie durch die Änderung des Aggregatzustandes eines PCM-Speichermaterials 22 speichern. Durch die Speicherung der Wärmeenergie in den Latentwärmespeichern 18, 20 bleibt die Temperatur des Druckgases niedrig, so dass dieses bei einem bestimmten Druck weniger Volumen einnimmt und die Energiespeicherdichte des Druckgasspeichers 16 erhöht werden kann. Dadurch hat der Druckgasspeicher 16 eine wesentlich kompaktere Bauweise bei hoher Energiespeicherkapazität. Durch Zufuhr von Wärmeenergie an das Druckgas nach der Entnahme aus dem Druckgasspeicher 16 kann der Gesamtwirkungsgrad des Antriebssystems 1 wesentlich verbessert werden. Der Hydrospeicher 14 kann kontinuierlich über den pneumatisch-hydraulischen Wandler 12 beaufschlagt werden. Die gespeicherte Energie steht dann aufgrund der hohen Leistungsdichte des Hydrospeichers 14 schnell an der Hydromaschine zur Verfügung. In umgekehrter Richtung kann der Hydrospeicher 14 schnell von der Hydromaschine 6, beispielsweise durch Rekuperation von Bremsenergie des Fahrzeugs, gefüllt werden und die hydraulische Energie anschließend vergleichsweise langsam vom pneumatisch-hydraulischen Wandler 12 in pneumatische Energie überführt werden. Dadurch kann die installierte Leistung des pneumatisch-hydraulischen Wandlers 12 kleiner ausfallen.

Im Folgenden wird die Funktion des hydraulisch-pneumatischen Antriebs 1 anhand Figur 1 näher erläutert.

Zum Befüllen des Druckgasspeichers 16 wird beispielsweise die bei der Bremsung des Fahrzeugs anfallende Bremsenergie oder die Energie der Verbrennungskraftmaschine verwendet. Dabei wird die Hydromaschine 6 als Pumpe betrieben und treibt die dem pneumatisch-hydraulischen Wandler 12 zugeordnete, als Motor wirkende Hydromaschine 10 an. Die Hydromaschine 10 treibt über die Antriebswelle 30 die Niederdruck- und Hochdruckstufe 26, 28 der Pneumatikmaschine 24 des pneumatisch-hydraulischen Wandlers 12 an. Die Niederdruck- und Hochdruckstufe 26, 28 werden jeweils so betrieben, dass sie als Verdichter arbeiten. Bei der dargestellten zweistufigen Pneumatikmaschine 24 saugt die Niederdruckstufe 26 über einen Anschluss 69 Umgebungsluft an und verdichtet diese von Umgebungsdruckniveau auf einen mittleren Druck von beispielsweise etwa 15 bar. Die verdichtete Luft wird nach dem Verdichtungshub unter Umgehung des Wärmetauschers 38 und des Latentwärmespeichers 34 mit Wärmetauscher 36 über die Niederdruckleitung 32 und die Bypassleitung 42 in den Latentwärmespeicher 20 verschoben. Dort wird die bei der vorangegangenen Verdichtung des Gases in der Niederdruckstufe 26 entstandene Wärme in dem PCM-Speichermaterial 22 gespeichert, so dass die Temperatur der vorverdichteten Druckluft auf das Niveau der Arbeitstemperatur des Latentwärmespeichers 20 von beispielsweise 20°C sinkt. Der Latentwärmespeicher 20 arbeitet auf dem mittleren Druckniveau der Vorverdichterstufe. Die vorkomprimierte und abgekühlte Druckluft wird über die Niederdruckleitung 32 der Hochdruckstufe 28 zugeführt und in dieser auf einen Druck von etwa 200 bar verdichtet. Die Druckluft wird unter Umgehung des Wärmetauschers 62 und des Latentwärmespeichers 58 mit Wärmetauscher 60 über die Bypassleitung 66 und einem Teilstück der Hochdruckleitung 56 dem Latentwärmespeicher 18 zugeführt. Das Druckgas durchströmt somit nach jeder Pneumatikstufe 26, 28 einen der Latentwärmespeicher 18, 20, wobei die bei der vorangegangenen Verdichtung entstandene Wärme im Wesentlichen an die Wärmespeicher 18, 20 abgegeben wird. Aufgrund der Speicherung der Verdichtungswärme in den Latentwärmespeichern 18, 20 bleibt die Temperatur der verdichteten Luft niedrig, so dass sie bei einem bestimmten Druck weniger Volumen einnimmt. Dadurch wird die Energiespeicherdichte des Druckluftspeichers 16 wesentlich erhöht.

Die Latentwärmespeicher 34, 50, 58 mit Wärmetauscher 36, 52, 60 werden mit Abwärme der Verbrennungskraftmaschine oder einer anderen Wärmequelle befüllt. Die Befüllung kann immer dann stattfinden, wenn Wärme zur Verfügung steht, beispielsweise während des Betriebs einer Verbrennungskraftmaschine des Fahrzeugs. Diese Wärme steht damit auch zur Verfügung, wenn die Wärmequelle nicht im Betrieb ist, beispielsweise während des rein pneumatisch-hydraulischen Fahrens eines hydraulisch pneumatischen Hybridfahrzeugs.

Die Umsetzung der in dem Druckgasspeicher 16 gespeicherten pneumatischen Energie in hydraulische Energie zum Antrieb des Verbrauchers 2 erfolgt über den pneumatisch-hydraulischen Wandler 12. Hierzu wird die Pneumatikmaschine 24 als Motor bzw. Entspanner und die Hydromaschine 10 als Pumpe betrieben. Die vergleichsweise kalte Druckluft mit einer Temperatur von beispielsweise etwa 15°C bei einem Druck von etwa 200 bar wird aus dem Druckgasspeicher 16 entnommen und in dem Latentwärmespeicher 18 auf dessen Betriebstemperatur erwärmt. Die vorgewärmte Druckluft wird dem Latentwärmespeicher 58 mit Wärmetauscher 60 zugeführt und in diesem auf eine Temperatur von beispielsweise etwa 200°C aufgeheizt. Eine weitere Erwärmung kann in dem sich anschließenden Wärmetauscher 62 stattfinden in dem beispielsweise die Abgaswärme einer Verbrennungskraftmaschine direkt zur Erwärmung der Druckluft genutzt wird. Aufgrund der Erwärmung expandiert die Druckluft. Die aus dem Druckgasspeicher 16 entnommene Luft wird in der Hochdruckstufe 28 auf ein mittleres Druckniveau von beispielsweise 15 bar expandiert und verrichtet dabei über die Welle 30 Arbeit an der Hydromaschine 10. Diese wandelt die mechanische Energie in hydraulische Energie um. Die Druckluft kühlt sich bei der Expansion auf beispielsweise -5°C ab und wird nach der Hochdruckstufe 28 in den Latentwärmespeicher 50 mit Wärmetauscher 52 geleitet, da das Rückschlagventil 46 die direkte Verbindung sperrt. Der Latentwärmespeicher 50 arbeitet auf einem vergleichsweise niedrigen Temperaturniveau und erwärmt die teilentspannte Druckluft auf dessen Betriebstemperatur von beispielsweise 5°C. Der kalte Latentwärme-speicher 50 kann über den Wärmetauscher 52 beispielsweise zur Innenraum-klimatisierung des Fahrzeugs genutzt werden. Ebenso können die Latentwärme-speicher 18, 20 auf einem vergleichsweise niedrigen Temperaturniveau betrieben und mit einem Wärmetauscher beispielsweise für die Innenraumklimatisierung genutzt werden. Die im Latentwärmespeicher 50 mit Wärmetauscher 52 vorgewärmte Druckluft auf mittlerem Druckniveau wird in dem Latentwärmespeicher 20 und dem Latentwärmespeicher 34 mit Wärmetauscher 36 weiter aufgeheizt. Eine weitere Erwärmung kann über den in Reihe geschalteten Wärmetauscher 38, in dem beispielsweise die Abgaswärme der Verbrennungskraftmaschine direkt genutzt wird, erreicht werden. Dies führt zu einem Anstieg des Drucks im Bereich zwischen der Niederdruck- und der Hochdruckstufe 26, 28 bei konstantem Volumenstrom durch die Hochdruckstufe 28 oder zu einem erhöhten Volumenstrom durch die Hochdruckstufe 28 bei konstantem Druck im Bereich zwischen der Niederdruck- und der Hoch-druckstufe 26, 28. Die Niederdruckstufe 26 expandiert die Druckluft von einem mittleren Druckniveau auf ein niedriges Druckniveau von beispielsweise 5 bar oder auf Umgebungsdruck und verrichtet dabei über die Welle 30 Arbeit an der Hydro-maschine 10. Diese wandelt die mechanische Energie in hydraulische Energie um. Die hydraulische Energie kann beispielsweise zum Antrieb eines Fahrzeugs, für den Start einer Verbrennungskraftmaschine, für die Überbrückung von Zugkraft-unterbrechungen in einem mechanischen Getriebe während Schaltvorgängen oder für die Versorgung von Nebenaggregaten und Zusatzfunktionen verwendet werden.

Eine weitere Möglichkeit bietet die Verwendung der Druckluft für Startvorgänge der Verbrennungskraftmaschine. Dabei werden die Verbrennungsräume der Verbrennungskraftmaschine mit Druckluft beaufschlagt. Aufgrund der Expansion der Druckluft wird der Verbrennungskolben angetrieben und ab einer bestimmten Drehzahl Kraftstoff in die Verbrennungsräume eingespritzt, gezündet und die Druckluftzufuhr unterbrochen. Damit ist ein Startvorgang der Verbrennungskraftmaschine ohne elektrischen Starter möglich.

Weiterhin kann die aus dem pneumatisch-hydraulischen System austretende Druckluft auf niedrigem Druckniveau von beispielsweise 5 bar genutzt werden, um während der gleichzeitigen Leistungsabnahme von der Verbrennungskraftmaschine und vom hydraulisch-pneumatischen System die Verbrennungskraftmaschine aufzuladen (z.B. Boostbetrieb in einem Hybridfahrzeug). Wird die Verbrennungskraftmaschine wieder alleine betrieben und der pneumatisch-hydraulische Antrieb abgeschaltet (z.B. nach dem Boostvorgang) übernimmt der Turbolader oder Kompressor die Aufladung der Verbrennungskraftmaschine. Es ist auch möglich, den Turbolader oder Kompressor während des kompletten Boostvorgangs durch einen Bypass im Abgastrakt zu umgehen und erst gegen Ende des Boostvorgangs wieder zuzuschalten. Des Weiteren ist eine zeitweise Aufladung von Saugmotoren ohne Turbolader oder Kompressor möglich. Zudem ist auch die direkte Entnahme von Druckluft aus dem Druckgasspeicher 16 denkbar um die Verbrennungskraftmaschine aufzuladen. Dazu wird die Druckluft vom Druckniveau des Druckgasspeichers 16 auf den Ladedruck der Verbrennungskraftmaschine entspannt, wobei eine starke Abkühlung der Ladeluft erfolgt und der Wirkungsgrad der Verbrennungskraftmaschine gesteigert werden kann.

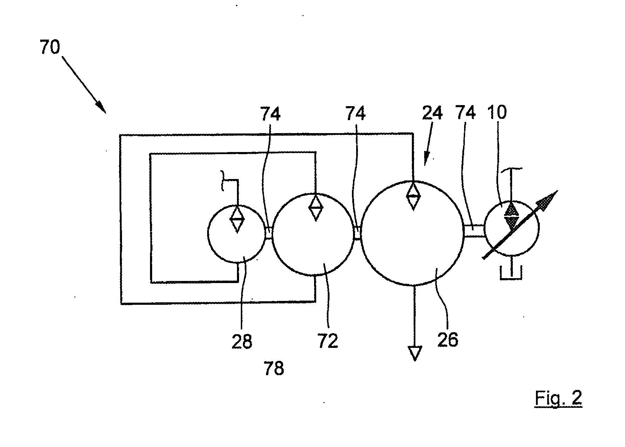

In Figur 2 ist ein Schaltschema eines pneumatisch-hydraulischen Wandlers 70 gezeigt, der sich von dem vorbeschriebenen Wandler 12 im Wesentlichen dadurch unterscheidet, dass eine dreistufige Pneumatikmaschine 24 bestehend aus einer Hochdruckstufe 28, einer Mitteldruckstufe 72 und einer Niederdruckstufe 26 Verwendung findet. Die einzelnen Stufen 26, 28, 72 sind in Reihe geschaltet und über eine gemeinsame Welle 74 mit der verstellbaren Hydromaschine 10 verbunden. Das heißt, die Verstellung des Wandlers 70 erfolgt bei dieser Variante ebenfalls hydraulikseitig. Aus Gründen der Übersichtlichkeit sind die dem Wandler 70 zugeordneten Wärmetauscher, Wärmespeicher und Druckspeicher nicht dargestellt. Das Leitungssystem ist ebenfalls stark vereinfacht dargestellt.

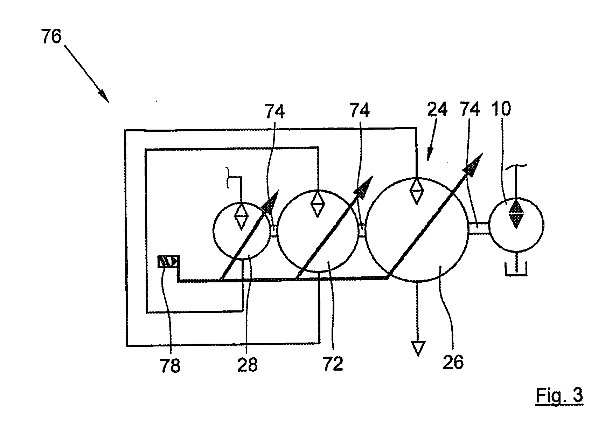

Figur 3 zeigt ein Schaltschema eines dreistufigen pneumatisch-hydraulischen Wandlers 76, der gegenüber dem vorbeschriebenen Ausführungsbeispiel eine gekoppelte pneumatikseitige Verstellung aufweist. Hierzu wird ein gemeinsames Verstellelement 78 verwendet. Die Hydromaschine 10 ist bei dieser Variante nicht verstellbar ausgeführt.

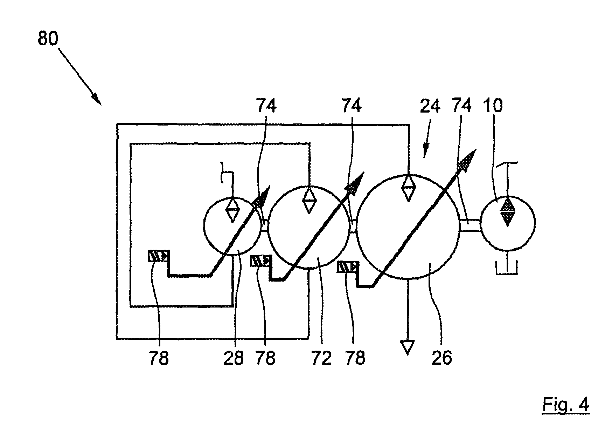

Das in Figur 4 dargestellte Ausführungsbeispiel eines dreistufigen pneumatisch-hydraulischen Wandlers 80 unterscheidet sich von dem vorbeschriebenen Ausführungsbeispiel im Wesentlichen durch eine pneumatikseitige Einzelverstellung der Hochdruckstufe 28, der Mitteldruckstufe 72 und der Niederdruckstufe 26 über jeweils ein Verstellelement 82. Die Hydromaschine 10 ist bei dieser Variante ebenfalls nicht verstellbar ausgeführt.

Der erfindungsgemäße Antrieb ist nicht auf die beschriebenen Wärmezufuhr- und -entnahmemöglichkeiten beschränkt, vielmehr können andere oder lediglich eine Auswahl der beschriebenen Wärmezufuhr- und -entnahmemöglichkeiten Verwendung finden. Des Weiteren ist der beschriebene pneumatisch-hydraulische Wandler keinesfalls auf den beschriebenen Aufbau der Pneumatikmaschine beschränkt, so kann diese beispielsweise einstufig oder mehr als dreistufig ausgeführt sein.

Offenbart ist ein hydraulisch-pneumatischer Antrieb 1 für zumindest einen Verbraucher 2, mit einem pneumatisch-hydraulischen Wandler 12, 70, 76, 80, über den in zumindest einem Druckgasspeicher 16 gespeicherte Energie in hydraulische Energie umsetzbar und zum Antrieb des hydraulischen Verbrauchers 2 verwendbar ist und über den hydraulische Energie des Verbrauchers 2 in pneumatische Energie umsetzbar ist, wobei zumindest ein dem Druckgasspeicher 16 zugeordneter Wärmespeicher 18, 20, 34, 50, 58 dem warmen Druckgas beim Befüllen des Druckgasspeichers Wärmeenergie entnimmt und/oder dem Druckgas bei der Entnahme Wärmeenergie zuführt.

## Patentansprüche

1. Hydraulisch-pneumatischer Antrieb für zumindest einen Verbraucher (2), mit einem pneumatisch-hydraulischen Wandler (12, 70, 76, 80), über den in zumindest einem Druckgasspeicher (16) gespeicherte Energie in hydraulische Energie umsetzbar und zum Antrieb des hydraulischen Verbrauchers (2) verwendbar ist und über den hydraulische Energie des Verbrauchers (2) in pneumatische Energie umsetzbar ist, **gekennzeichnet durch** zumindest einen dem Druckgasspeicher (16) zugeordneten Wärmespeicher (18, 20, 34, 50, 58), der warmem Druckgas beim Befüllen des Druckgasspeichers (16) Wärmeenergie entnimmt und/oder der dem Druckgas bei der Entnahme Wärmeenergie zuführt.

2. Antrieb nach Patentanspruch 1, wobei der zumindest eine Wärmespeicher (18, 20, 34, 50, 58) ein Latentwärmespeicher ist.

3. Antrieb nach Patentanspruch 2, wobei der Latentwärmespeicher (18, 20, 34, 50, 58) zumindest zwei unterschiedliche Speichermaterialien mit verschiedenen Betriebstemperaturen aufweist, wobei das warme Druckgas zunächst das Speichermedium mit der höheren Betriebstemperatur und dann das Speichermedium mit der niedrigeren Betriebstemperatur beaufschlagt.

4. Antrieb nach einem der vorhergehenden Patentansprüche, wobei der zumindest eine Wärmespeicher (34, 50, 58) über einen Wärmetauscher (36, 52, 60) mit der Abwärme einer Wärmequelle, insbesondere einer Verbrennungskraftmaschine, oder mit der Kälte einer Kältequelle, insbesondere einer Klimaanlage, beaufschlagt ist.

5. Antrieb nach einem der vorhergehenden Patentansprüche, wobei im Strömungspfad des Druckgases zumindest ein Wärmetauscher (38, 62) angeordnet ist, der das Druckgas mit Abwärme einer Verbrennungskraftmaschine oder einer anderen Wärmequelle, insbesondere mit Abgaswärme beaufschlagt.

6. Antrieb nach einem der vorhergehenden Patentansprüche, wobei dem warmen Druckgas beim Befüllen des Druckgasspeichers (16) über den Wärmespeicher (18, 20) Wärmeenergie entnommen wird.

7. Antrieb nach einem der Patentansprüche 4 bis 6, wobei dem kalten Druckgas bei der Entnahme aus dem Druckgasspeicher (16) über den Wärmespeicher (18, 20), den Wärmespeicher (34, 50, 58) mit Wärmetauscher (36, 52, 60) und/oder den Wärmetauscher (38, 62) Wärmeenergie zugeführt wird.

8. Antrieb nach einem der vorhergehenden Patentansprüche, wobei als Druckgas Luft verwendet wird.

9. Antrieb nach einem der vorhergehenden Patentansprüche, wobei der pneumatisch-hydraulische-Wandler (12, 70, 76, 80) zumindest eine drehfest mit mindestens einer Hydromaschine (10) verbundene, als Motor oder Pumpe wirkende Pneumatikmaschine (24) aufweist.

10. Antrieb nach Patentanspruch 9, wobei die Hydromaschine (6) und die Pneumatikmaschine (24) auf einer gemeinsamen Welle (30) angeordnet sind.

11. Antrieb nach Patentanspruch 9 oder 10, wobei die Pneumatikmaschine (24) und/oder die Hydromaschine (10) verstellbar ausgeführt ist.

12. Antrieb nach einem der Patentansprüche 9 bis 11, wobei der Hydromaschine (10) zumindest ein Hydrospeicher (14) zugeordnet ist.

13. Antrieb nach einem der Patentansprüche 9 bis 12, wobei die Pneumatikmaschine (24) und/oder die Hydromaschine (10) mehrstufig ausgeführt ist.

14. Antrieb nach Patentanspruch 13, wobei das Druckgas nach jeder Pneumatikstufe (26, 28, 72) zumindest einen der Wärmespeicher (18, 20, 34, 50, 58) beaufschlagt und die bei der vorangegangenen Verdichtung entstandene Wärme im Wesentlichen an den Wärmespeicher (18, 20, 34, 50, 58) abgibt und/oder bei einem vorangegangen Expansionsvorgang die in dem Wärmespeicher (18, 20, 34, 50, 58) gespeicherte Wärme im Wesentlichen aufnimmt.

## Claims

1. Hydraulic-pneumatic drive for at least one consumer (2), having a pneumatic-hydraulic converter (12, 70, 76, 80) by means of which energy stored in at least one compressed gas store (16) can be converted into hydraulic energy and used for driving the hydraulic consumer (2) and by means of which hydraulic energy of the consumer (2) can be converted into pneumatic energy, **characterized by** at least one heat store (18, 20, 34, 50, 58) which is assigned to the compressed gas store (16) and which extracts heat energy from hot compressed gas during the filling of the compressed gas store (16) and/or which supplies heat energy to the compressed gas during the withdrawal.

2. Drive according to Patent Claim 1, wherein the at least one heat store (18, 20, 34, 50, 58) is a latent heat store.

3. Drive according to Patent Claim 2, wherein the latent heat store (18, 20, 34, 50, 58) has at least two different storage materials with different operating temperatures, wherein the hot compressed gas acts firstly on the storage medium with the higher operating temperature and then on the storage medium with the lower operating temperature.

4. Drive according to one of the preceding patent claims, wherein the at least one heat store (34, 50, 58) is acted on by means of a heat exchanger (36, 52, 60) with the waste heat from a heat source, in particular from an internal combustion engine, or with the cold from a cold source, in particular from an air-conditioning system.

5. Drive according to one of the preceding patent claims, wherein in the flow path of the compressed gas there is arranged at least one heat exchanger (38, 62) which acts on the compressed gas with waste heat from an internal combustion engine or from some other heat source, in particular with exhaust-gas heat.

6. Drive according to one of the preceding patent claims, wherein, by means of the heat store (18, 20), heat energy is extracted from the hot compressed gas during the filling of the compressed gas store (16).

7. Drive according to one of Patent Claims 4 to 6, wherein, by means of the heat store (18, 20), the heat store (34, 50, 58) with heat exchanger (36, 52, 60) and/or the heat exchanger (38, 62), heat energy is supplied to the cold compressed gas during the withdrawal from the compressed gas store (16).

8. Drive according to one of the preceding patent claims, wherein air is used as compressed gas.

9. Drive according to one of the preceding patent claims, wherein the pneumatic-hydraulic converter (12, 70, 76, 80) has at least one pneumatic machine (24) which is connected to at least one hydraulic machine (10) for conjoint rotation therewith and which acts as a motor or pump.

10. Drive according to Patent Claim 9, wherein the hydraulic machine (6) and the pneumatic machine (24) are arranged on a common shaft (30).

11. Drive according to Patent Claim 9 or 10, wherein the pneumatic machine (24) and/or the hydraulic machine (10) are/is designed to be adjustable.

12. Drive according to one of Patent Claims 9 to 11, wherein the hydraulic machine (10) is assigned at least one hydraulic store (14).

13. Drive according to one of Patent Claims 9 to 12, wherein the pneumatic machine (24) and/or the hydraulic machine (10) are/is of multi-stage design.

14. Drive according to Patent Claim 13, wherein the compressed gas downstream of each pneumatic stage (26, 28, 72) acts on at least one of the heat stores (18, 20, 34, 50, 58) and substantially discharges the heat generated during the preceding compression to the heat store (18, 20, 34, 50, 58), and/or in the case of a preceding expansion process, substantially absorbs the heat stored in the heat store (18, 20, 34, 50, 58).

## Revendications

1. Entraînement hydropneumatique pour au moins un élément consommateur d'énergie (2), avec un transformateur pneumohydraulique (12, 70, 76, 80) par le biais duquel l'énergie accumulée dans au moins un accumulateur de gaz sous pression (16) est transformable en énergie hydraulique et utilisable pour entraîner l'élément consommateur d'énergie hydraulique (2) et par le biais duquel l'énergie hydraulique de l'élément consommateur d'énergie (2) peut être transformée en énergie pneumatique, **caractérisé par** la présence d'au moins un accumulateur de chaleur (18, 20, 34, 50, 58) associé à l'accumulateur de gaz sous pression (16) prélevant l'énergie calorique du gaz sous pression chaud lors du remplissage de l'accumulateur de gaz sous pression (16) et/ou introduisant l'énergie calorique dans le gaz sous pression lors de la sortie dudit accumulateur.

2. Entraînement selon la revendication 1, l'au moins un accumulateur de chaleur (18, 20, 34, 50, 58) étant un accumulateur de chaleur latente.

3. Entraînement selon la revendication 2, l'accumulateur de chaleur latente (18, 20, 34, 50, 58) comportant au moins deux matériaux d'accumulation différents présentant des températures de fonctionnement différentes, le gaz sous pression chaud alimentant d'abord l'agent accumulateur avec la température de fonctionnement la plus élevée puis alimentant l'agent accumulateur avec la température de fonctionnement la plus basse.

4. Entraînement selon l'une quelconque des revendications précédentes, l'au moins un accumulateur de chaleur (34, 50, 58) étant chargé avec la chaleur d'échappement d'une source de chaleur, notamment d'un moteur à combustion interne, ou avec le froid d'une source de froid, notamment d'une installation de climatisation, par le biais d'un échangeur thermique (36, 52, 60).

5. Entraînement selon l'une quelconque des revendications précédentes, au moins un échangeur thermique (38, 62) étant disposé dans le chemin d'écoulement du gaz sous pression, ledit échangeur thermique chargeant le gaz sous pression avec la chaleur d'échappement d'un moteur à combustion interne ou d'une autre source de chaleur, notamment avec la chaleur des gaz d'échappement.

6. Entraînement selon l'une quelconque des revendications précédentes, de l'énergie calorique étant prélevée du gaz sous pression chaud par le biais de l'accumulateur de chaleur (18, 20) lors du remplissage de l'accumulateur de gaz sous pression (16).

7. Entraînement selon l'une quelconque des revendications 4 à 6, de l'énergie calorique étant ajoutée au gaz sous pression froid par le biais de l'accumulateur de chaleur (18, 20), de l'accumulateur de chaleur (34, 50, 58) associé à l'échangeur thermique (36, 52, 60) et/ou de l'échangeur thermique (38, 62) lors de la sortie de l'accumulateur de gaz sous pression (16).

8. Entraînement selon l'une quelconque des revendications précédentes, le gaz sous pression utilisé étant de l'air.

9. Entraînement selon l'une quelconque des revendications précédentes, le transformateur pneumohydraulique (12, 70, 76, 80) comportant au moins un moteur pneumatique (24) relié solidairement en rotation à au moins un moteur hydraulique (10) et agissant comme un moteur ou une pompe.

10. Entraînement selon la revendication 9, le moteur hydraulique (6) et le moteur pneumatique (24) étant disposés sur un arbre (30) commun.

11. Entraînement selon la revendication 9 ou 10, le moteur pneumatique (24) et/ou le moteur hydraulique (10) étant réalisés de façon à pouvoir être réglés.

12. Entraînement selon l'une quelconque des revendications 9 à 11, au moins un accumulateur hydraulique (14) étant associé au moteur hydraulique (10).

13. Entraînement selon l'une quelconque des revendications 9 à 12, le moteur pneumatique (24) et/ou le moteur hydraulique (10) étant réalisés à plusieurs étages.

14. Entraînement selon la revendication 13, le gaz sous pression alimentant au moins un des accumulateurs de chaleur (18, 20, 34, 50, 58) en fonction de chaque étage pneumatique (26, 28, 72) et rendant pour l'essentiel à l'accumulateur de chaleur (18, 20, 34, 50, 58) la chaleur produite lors de la compression et/ou recevant pour l'essentiel la chaleur accumulée dans l'accumulateur de chaleur (18, 20, 34, 50, 58) en présence d'un processus d'expansion.
